# EUROPEAN PATENT SPECIFICATION

(11) **EP 4 375 162 B1**
(45) Date of publication and mention of the grant of the patent: **29.04.2026**
(21) Application number: 23203241.7
(22) Date of filing: 12.10.2023
(51) Int. Cl.: B62D 1/10, B62D 5/00

(54) **STEERING CONTROL DEVICE AND STEERING CONTROL METHOD**
LENKSTEUERUNGSVORRICHTUNG UND LENKSTEUERUNGSVERFAHREN
DISPOSITIF DE COMMANDE DE DIRECTION ET PROCÉDÉ DE COMMANDE DE DIRECTION

(30) Priority: 17.10.2022 JP 2022166309
(43) Date of publication of application: 29.05.2024
(73) Proprietor: JTEKT CORPORATION, Kariya-shi, Aichi-ken, 448-8652 (JP); TOYOTA JIDOSHA KABUSHIKI KAISHA, Toyota-shi, Aichi-ken, 471-8571 (JP)
(72) Inventor: MATSUMOTO, Taiki, Kariya-shi, Aichi-ken, 448-8652 (JP); ABE, Kenichi, Kariya-shi, Aichi-ken, 448-8652 (JP); KAJISAWA, Yuuta, Kariya-shi, Aichi-ken, 448-8652 (JP); NAGASHIMA, Yugo, Kariya-shi, Aichi-ken, 448-8652 (JP); HASEGAWA, Kazuma, Kariya-shi, Aichi-ken, 448-8652 (JP); KOUDAI, Takashi, Kariya-shi, Aichi-ken, 448-8652 (JP); YAMASHITA, Yosuke, Toyota-shi, Aichi-ken, 471-8571 (JP); TAKAYAMA, Shintaro, Toyota-shi, Aichi-ken, 471-8571 (JP); KATAYAMA, Hiroyuki, Toyota-shi, Aichi-ken, 471-8571 (JP); YAMASHITA, Masaharu, Toyota-shi, Aichi-ken, 471-8571 (JP)
(74) Representative: Winter, Brandl - Partnerschaft mbB

(56) References cited:
- WO-A1-96/05085
- CN-A- 115 038 635
- DE-A1- 102006 001 357
- DE-A1- 102017 218 830
- JP-A- 2008 149 748
- JP-A- 2022 050 163
- US-A1- 2018 319 367
- US-B2- 8 327 699

## Description

### BACKGROUND OF THE INVENTION

### 1. Field of the Invention

The present invention relates to a steering control device and a steering control method.

### 2. Description of Related Art

There is a so-called steer-by-wire type steering device in which dynamic power transmission is not performed between a steering wheel and a turning wheel. The steering device includes a reaction force mechanism including a reaction force motor that generates steering reaction force that is given to steering shaft, and a turning mechanism including a turning motor that generates turning force that turns the turning wheel. At the time of traveling of a vehicle, a control device for the steering device generates the steering reaction force through an electricity supply control for the reaction force motor, and turns the turning wheel through an electricity supply control for the turning motor.

In the steer-by-wire type steering device, the steering wheel is not constrained by the turning mechanism. Therefore, when some sort of external force is given to the steering wheel in a state where an electric power source of the vehicle has been turned off, there is a risk that the steering wheel rotates. At this time, since the turning wheel does not operate, the position relation between the steering wheel and the turning wheel becomes different from an original position relation corresponding to a predetermined rudder angle ratio. The rudder angle ratio is a ratio between the steering angle of the steering wheel and the turning angle of the turning wheel.

For example, a steering device in Japanese Unexamined Patent Application Publication No. 2021-195086 (JP 2021-195086 A) has a function to automatically adjust the rotation position of the steering wheel when the electric power source of the vehicle has been turned on. The control device for the steering device calculates the gap amount of the rotation position of the steering wheel, through the comparison between the rotation position of the steering wheel when the electric power source of the vehicle has been turned off and the rotation position of the steering wheel when the electric power source of the vehicle has been turned on, and drives the reaction force motor such that the gap amount becomes 0 (zero).

Further, the steering device in JP 2021-195086 A has a function to learn rudder angle middle-point information about the steering wheel. The rudder angle middle-point information is the rotation angle of the reaction force motor that corresponds to a steering neutral position of the steering wheel. For example, at the time of battery replacement work, when the electric power source of the vehicle has been turned on for the first time after the attachment of a new battery, the control device for the steering device executes a process for learning the steering neutral position of the steering wheel. The reason is shown as follows.

In the case where the battery replacement work is performed, when the battery has been detached from the vehicle, electric power is not supplied to the control device. Therefore, the rudder angle middle-point information stored in the control device is lost. Thereby, there is a risk that it is difficult to keep the position relation between the steering wheel and the turning wheel to a position relation corresponding to a predetermined rudder angle ratio. Therefore, at the time of the battery replacement work, when the electric power source of the vehicle has been turned on for the first time after the attachment of the new battery, it is necessary to learn the steering neutral position of the steering wheel.
A steering control device having the features of the preamble of claim 1 is known from US 8 327 699 B2. A steering control device is known from JP 2022 050163 A.

### SUMMARY OF THE INVENTION

For conventional steering devices including the steering device in JP 2021-195086 A, there is the following concern. When maintenance or the like of the vehicle is performed in a vehicle factory, vehicle sales company or the like, some sort of external force sometimes acts on the steering shaft. At this time, there is a risk that the steering shaft rotates due to the external force. There is concern that the work relevant to the maintenance or the like is hindered by the rotation of the steering shaft. Therefore, when maintenance or the like is performed, it is desired to appropriately cope with the rotation of the steering shaft due to an external force.

A steering control device according to a first aspect of the present invention configured to control a steering device, the steering device including a steering shaft to which a handle is detachably coupled and a motor configured to generate torque that is given to the steering shaft. The steering control device includes a processing circuit configured to execute a process for controlling driving of the motor. The process for controlling the driving of the motor includes a lock process of driving the motor such that the rotation position of the steering shaft is fixed at a specific position, in a state where the handle has been detached from the steering shaft.

For example, when maintenance or the like is performed, the handle is sometimes detached from the steering shaft. At this time, there is a risk that some sort of external force acts on the steering shaft and thereby the steering shaft rotates. There is concern that the work relevant to the maintenance or the like is hindered by the rotation of the steering shaft.

In this regard, with the steering control device according to the first aspect of the present invention, in the state where the handle has been detached from the steering shaft, for example, for the maintenance or the like, the rotation position of the steering shaft is fixed at the specific position through the control of the motor. Therefore, it is possible to appropriately cope with the rotation of the steering shaft due to an external force. Further, even when an external force acts on the steering shaft, it is easy to perform the work relevant to the maintenance or the like.

In the steering control device according to the first aspect of the present invention, the processing circuit is configured to start execution of the lock process when a command from an external tool has been received.

With the steering control device according to the first aspect of the present invention, it is possible to fix the rotation position of the steering shaft at a middle-point position, simply by sending the command from the external tool. Therefore, it is possible to easily perform attachment and detachment works for the handle, particularly, attachment work.

In the steering control device according to the first aspect of the present invention, the specific position may be a middle-point position of the steering shaft that corresponds to a straight moving state of a vehicle.

With the steering control device according to the first aspect of the present invention, even when an external force acts on the steering shaft, it is possible to attach the handle in the correct orientation. That is, it is possible to attach the handle to the steering shaft such that the middle-point position of the handle and the middle-point position of the steering shaft coincide with each other.

In the steering control device according to the first aspect of the present invention, the processing circuit may be configured to set a motor middle-point as a target rotation angle of the motor, and drive the motor such that a difference between the target rotation angle and an actual rotation angle of the motor is eliminated, as the lock process, the motor middle-point being a rotation position of the motor that corresponds to the straight moving state of the vehicle.

With the steering control device according to the first aspect of the present invention, the rotation position of the motor is fixed at the motor middle-point, and thereby the rotation position of the steering shaft is fixed at the middle-point position.

In the steering control device according to the first aspect of the present invention, the steering device may include a rudder angle sensor configured to detect a steering angle of the handle. In this case, the processing circuit may be configured to set a middle point of the steering angle that corresponds to the straight moving state of the vehicle, as a target rotation angle of the steering angle, and drive the motor such that a difference between the target rotation angle and the steering angle that is detected through the rudder angle sensor is eliminated, as the lock process.

With the steering control device according to the first aspect of the present invention, the steering angle is fixed at the middle point of the steering angle, and thereby the rotation position of the steering shaft is fixed at the middle-point position.

In the steering control device according to the first aspect of the present invention, the specific position may be a rotation position of the steering shaft when the handle has been detached.

Depending on the work content for the maintenance, it is required to fix the rotation position of the steering shaft at the rotation position when the handle has been detached. With the steering control device according to the first aspect of the present invention, it is possible to meet the requirement depending on the work content for the maintenance.

In the steering control device according to the first aspect of the present invention, the steering device may include a turning shaft that turns a turning wheel of a vehicle. In this case, the specific position may be a rotation position of the steering shaft that corresponds to an end position that is a limit position in a physically movable range of the turning shaft.

Depending on the work content for the maintenance, it is required to fix the rotation position of the steering shaft at the position corresponding to the end position of the turning shaft. With the steering control device according to the first aspect of the present invention, it is possible to meet the requirement depending on the work content for the maintenance.

In the steering control device according to the first aspect of the present invention, the steering device may be a steer-by-wire type steering device in which dynamic power transmission is not performed between the handle and a turning wheel of a vehicle. The motor may be a reaction force motor configured to generate steering reaction force that is given to the steering shaft.

The above lock process may be applied to the maintenance or the like of the steer-by-wire type steering device.

In the steering control device according to the first aspect of the present invention, the steering device may be an electric power steering device in which the handle and a turning wheel of a vehicle are coupled to each other such that dynamic power is transmitted between the handle and the turning wheel of the vehicle. The motor may be an assist motor configured to generate assist force by which steering of the handle is assisted.

The above lock process may be applied to the maintenance or the like of the electric power steering device.

A steering control method according to a second aspect of the present invention is a method for controlling a steering device, the steering device including a steering shaft to which a handle is detachably coupled and a motor configured to generate torque that is given to the steering shaft. The steering control method includes driving the motor such that a rotation position of the steering shaft is fixed at a specific position by a processing circuit, in a state where the handle has been detached from the steering shaft.

With the steering control method according to the second aspect of the present invention, in the state where the handle has been detached from the steering shaft, for example, for maintenance or the like, the rotation position of the steering shaft is fixed at the specific position through the control of the motor. Therefore, even when an external force acts on the steering shaft, it is possible to smoothly perform the work relevant to the maintenance or the like.

With the steering control device according to the first aspect of the present invention and the steering control method according to the second aspect of the present invention, when maintenance or the like is performed, it is possible to appropriately cope with the rotation of the steering shaft due to an external force.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a configuration diagram of a steer-by-wire type steering device that is equipped with an embodiment of a steering control device;
FIG. 2 is a time chart showing a starting sequence for a reaction force control device in the embodiment;
FIG. 3A is a schematic diagram showing an example of the relation between the rotation position of a steering wheel and the rotation position of a steering shaft before the steering wheel is detached;
FIG. 3B is a unit circle showing an example of relation between the rotation angle of the steering wheel and the rotation angle of the steering shaft before the steering wheel is detached;
FIG. 4A is a schematic diagram showing an example of the rotation position of the steering shaft in a state where the steering wheel has been detached;
FIG. 4B is a unit circle showing an example of the rotation angle of the steering shaft in the state where the steering wheel has been detached;
FIG. 5A is a schematic diagram showing a comparative example of the rotation position of the steering shaft that is changed by an external force in the state where the steering wheel has been detached;
FIG. 5B is a unit circle showing a comparative example of the rotation angle of the steering shaft that is changed by an external force in the state where the steering wheel has been detached;
FIG. 6A is a schematic diagram showing a comparative example of the relation between the rotation position of the steering wheel and the rotation position of the steering shaft after the steering wheel has been attached again;
FIG. 6B is a unit circle showing a comparative example of the relation between the rotation angle of the steering wheel and the rotation angle of the steering shaft after the steering wheel has been attached again;
FIG. 7A is a schematic diagram showing the rotation position of the steering shaft according to the embodiment when an external force is given to the steering shaft in the state where the steering wheel has been detached;
FIG. 7B is a unit circle showing the rotation angle of the steering shaft according to the embodiment when an external force is given to the steering shaft in the state where the steering wheel has been detached;
FIG. 8A is a schematic diagram showing the relation between the rotation position of the steering wheel and the rotation position of the steering shaft according to the embodiment after the steering wheel has been attached again;
FIG. 8B is unit circle showing the relation between the rotation angle of the steering wheel and the rotation angle of the steering shaft according to the embodiment after the steering wheel has been attached again; and
FIG. 9 is configuration diagram of an electric power steering device that is equipped with a vehicle control device according to another embodiment.

### DETAILED DESCRIPTION OF EMBODIMENTS

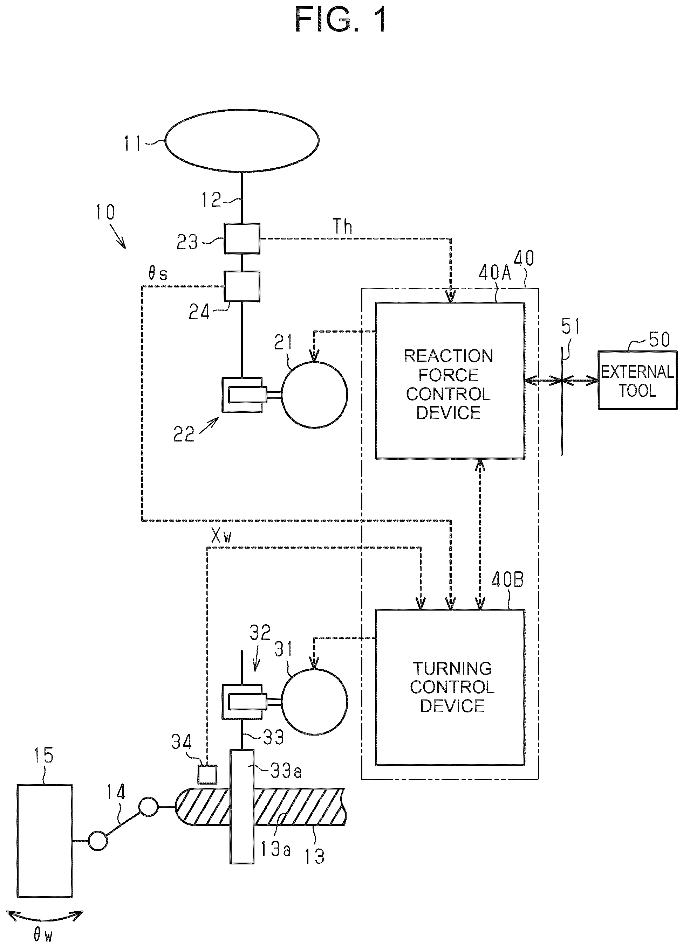

An embodiment of a steering control device and a steering control method will be described below. As shown in FIG. 1, a steering device 10 of a vehicle is a steer-by-wire type steering device. The steering device 10 includes a steering shaft 12 coupled to a steering wheel 11. The steering wheel 11 is a handle that is operated when the vehicle is driven. The steering wheel 11 is detachable from the steering shaft 12. Further, the steering device 10 includes a turning shaft 13 that extends along a vehicle width direction (a right-left direction in FIG. 1). Turning wheels 15 are coupled to both ends of the turning shaft 13 through tie rods 14 respectively. A turning angle θw of the turning wheels 15 is changed by the straight motion of the turning shaft 13. The steering shaft 12 and the turning shaft 13 constitute a steering mechanism of the vehicle. FIG. 1 illustrates only one turning wheel 15.

The steering device 10 includes a reaction force motor 21 and a speed reduction mechanism 22. For example, the reaction force motor 21 is a three-phase brushless motor. The reaction force motor 21 is a generation source of steering reaction force. The steering reaction force is force that acts in a direction opposite to the direction of the operation of the steering wheel 11 by a driver. The steering reaction force is steering force for steering that is generated by the reaction force motor 21 when the movement direction of the vehicle is changed.

A rotation shaft of the reaction force motor 21 is coupled to the steering shaft 12 through the speed reduction mechanism 22. The torque of the reaction force motor 21 is given to the steering shaft 12 as the steering reaction force. Since the steering reaction force is given to the steering wheel 11, it is possible to give a moderate hand response feeling to the driver.

The steering device 10 includes a turning motor 31 and the speed reduction mechanism 32. For example, the turning motor 31 is a three-phase brushless motor. The turning motor 31 is a generation source of turning force. The turning force is dynamic force by which the turning wheels 15 are turned. The turning force is steering force for steering that is generated by the turning motor 31 when the movement direction of the vehicle is changed.

A rotation shaft of the turning motor 31 is coupled to a pinion shaft 33 through the speed reduction mechanism 32. A pinion tooth 33a of the pinion shaft 33 engages with a rack tooth 13a of the turning shaft 13. The torque of the turning motor 31 is given to the turning shaft 13 through the pinion shaft 33 as the turning force. The turning shaft 13 moves along the vehicle width direction, depending on the rotation of the turning motor 31.

The steering device 10 includes a steering control device 40. The steering control device 40 controls the steering device 10. The steering control device 40 includes a processing circuit including one of the following three configurations A1, A2 and A3.

A1. One or more processors that operate in accordance with computer programs that are software. The processor includes a central processing unit (CPU) and a memory.

A2. One or more dedicated hardware circuits that execute at least some processes of various processes, as exemplified by application specific integrated circuits (ASIC). The ASIC includes a CPU and a memory.

A3. Hardware circuits in which the configurations A1 and A2 are combined. The memory is a medium that can be read by a computer, and stores programs in which processes or commands for the computer are written. In the embodiment, the computer is a CPU. The memory includes a random-access memory (RAM) and a read-only memory (ROM). The CPU executes various controls by executing programs stored in the memory with a given calculation period.

The steering control device 40 includes a reaction force control device 40A and a turning control device 40B.

The reaction force control device 40A is a processing device (processing circuit) that executes a process for controlling the driving of the reaction force motor 21. The reaction force control device 40A executes a reaction force control for causing the reaction force motor 21 to generate the steering reaction force depending on the steering torque Th. The reaction force control device 40A calculates a target steering reaction force based on the steering torque Th that is detected through a torque sensor 23. The torque sensor 23 is provided on the steering shaft 12. The reaction force control device 40A controls the electric supply to the reaction force motor 21 such that the actual steering reaction force that is given to the steering shaft 12 coincides with the target steering reaction force.

A so-called mechatronically integrated reaction force actuator may be configured by integrally providing the reaction force control device 40A and the reaction force motor 21.

The turning control device 40B is a processing device (processing circuit) that executes a process for controlling the driving of the turning motor 31. The turning control device 40B executes a turning control for causing the turning motor 31 to generate the turning force for turning the turning wheels 15 depending on steering state. The turning control device 40B takes in a steering angle θs that is detected through a rudder angle sensor 24 and a stroke Xw of the turning shaft 13 that is detected through a stroke sensor 34. The stroke Xw is a displacement amount from a neutral position of the turning shaft 13, and is a state variable that reflects the turning angle θw. The rudder angle sensor 24 is provided between the torque sensor 23 on the steering shaft 12 and the speed reduction mechanism 22. The steering angle θs is the rotation angle of the steering shaft 12. The stroke sensor 34 is provided near the turning shaft 13.

The turning control device 40B calculates a target turning angle of the turning wheels 15, based on the steering angle θs that is detected through the rudder angle sensor 24. The turning control device 40B calculates the tuning angle θw, based on the stroke Xw of the turning shaft 13 that is detected through the stroke sensor 34. The turning control device 40B controls the electricity supply to the turning motor 31 such that the turning angle θw that is calculated based on the stroke Xw coincides with the target turning angle.

A so-called mechatronically integrated turning actuator may be configured by integrally providing the turning control device 40B and the turning motor 31. Further, the turning control device 40B and the reaction force control device 40A can perform communication. By communication, the turning control device 40B and the reaction force control device 40A can exchange information with each other.

The steering control device 40, that is, the reaction force control device 40A and the turning control device 40B are connected to an in-vehicle network 51. For example, the in-vehicle network 51 is a controller area network (CAN). An external tool 50 can be connected to the in-vehicle network 51. The external tool 50 and the reaction force control device 40A exchange information with each other through the in-vehicle network 51.

The external tool 50 is an external apparatus, and for example, is a portable terminal possessed by a worker that performs the assembly of the vehicle or the maintenance of the vehicle. The maintenance of the vehicle includes maintenance of the steering device 10. Further, the maintenance includes various evaluations and the like. The external tool 50 may be a notebook personal computer. The personal computer includes a processing circuit that includes one of the above three configurations A1, A2 and A3. Further, the external tool 50 includes an input device, an output device, a storage device, and a communication device.

The input device includes a keyboard and a mouse, and is used for inputting a request or instruction from the worker. The output device includes a display device and a speaker, and outputs a variety of information. The storage device is an auxiliary storage device such as a hard disk, and stores a variety of programs and data that are needed for the maintenance of the vehicle. The communication device performs communication through the in-vehicle network 51. In response to the request or instruction that is input through the input device, the CPU transfers a variety of programs and data to the memory, and executes a process that is needed for the maintenance of the vehicle, through the execution of a variety of programs.

### Starting Sequence

Next, a starting sequence for the reaction force control device 40A will be described. The starting sequence is a sequence of processes that is executed when an electric power source of the vehicle has been turned on. While the electric power source of the vehicle is in the off-state, the reaction force control device 40A is kept in a state where the operation is stopped. Turning on or off the electric power source of the vehicle means turning on or off a starting switch that is provided at a driver's seat, for example. The starting switch is operated when a traveling drive source of the vehicle is started up or stopped, and is an ignition switch or a power switch, for example.

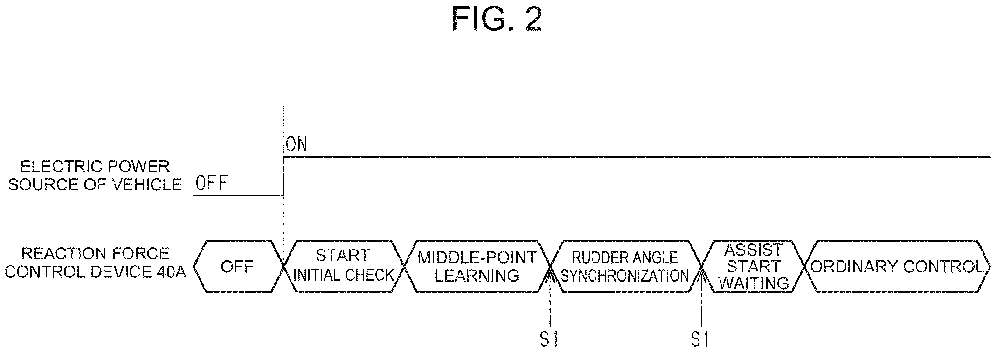

As shown in time chart in FIG. 2, when the electric power source of the vehicle is turned on, the reaction force control device 40A is started, sequentially executes an initial check, a middle-point learning process, and a rudder angle synchronization process, and then transitions to an assist start waiting state. The initial check, the middle-point learning process, and the rudder angle synchronization process are a sequence of preparation processes that is needed for starting the execution of the reaction force control to cause the reaction force motor 21 to generate the steering reaction force.

The initial check is an initial inspection that is executed when the electric power source of the vehicle has been turned on, and for example, includes the check of hardware, the initialization of the CPU, and the initialization of variables, flags, or the like.

The middle-point learning process is a process for learning the steering neutral position of the steering wheel 11. The steering device 10 includes a stopper mechanism that restricts the rotation of the steering wheel 11 for providing a limit of the steering angle θs of the steering wheel 11. For example, the stopper mechanism restricts the steering range of the steering wheel 11 to less than 360°. The reaction force control device 40A operates the steering wheel 11 to a first operation end and thereafter reversely operates the steering wheel 11 to a second operation end, through the control of the reaction force motor 21. Thereafter, the reaction force control device 40A calculates the middle point of the steering angle, based on rotation angles of the reaction force motor 21 at the start time and end time of the reverse operation of the steering wheel 11. The middle point of the steering angle corresponds to a motor middle-point that is the rotation position of the reaction force motor 21 when the steering wheel 11 is at the steering neutral position. The reaction force control device 40A stores the middle point of the steering angle and the motor middle-point in the memory, as the steering neutral position of the steering wheel 11. The middle point of the steering angle and the motor-middle-point are information relevant to the steering neutral position.

However, the reaction force control device 40A learns the steering neutral position of the steering wheel 11, only in the case where the information relevant to the steering neutral position stored in the memory has been lost. Examples of the situation where the information relevant to the steering neutral position is lost include a situation where the electric power source of the vehicle is turned on for the first time after the battery is newly attached to the vehicle. This is because the information relevant to the steering neutral position stored in the memory of the reaction force control device 40A is lost due to the stop of the supply of electric power to the reaction force control device 40A when the battery is detached from the vehicle in the replacement work of the battery.

Depending on the product specification and the like, the reaction force control device 40A may execute the middle-point learning process whenever the electric power source of the vehicle is turned on, or may execute the middle-point learning process when the reliability of the information relevant to the steering neutral position stored in the memory is low.

The rudder angle synchronization process is a process for correcting the rotation position of the steering wheel 11. When the rotation position of the steering wheel 11 is a position that is different from a rotation position corresponding to the turning position of the turning wheels 15, the reaction force control device 40A drives the reaction force motor 21 such that the rotation position of the steering wheel 11 becomes the rotation position corresponding to the turning position of the turning wheels 15.

For example, when the electric power source of the vehicle is turned off, the reaction force control device 40A stores the steering angle θs detected immediately before the electric power source of the vehicle is turned off, as a reference steering angle. The reference steering angle is a reference for determining whether the steering wheel 11 has rotated in a period during which the electric power source of the vehicle is in the off-state. When the steering angle θs immediately after the electric power source of the vehicle is turned on does not coincide with the reference steering angle, the reaction force control device 40A evaluates the difference between the steering angle θs immediately after the electric power source of the vehicle is turned on and the reference steering angle, and controls the electricity supply to the reaction force motor 21 such that the difference is eliminated.

The reaction force control device 40A may evaluate the difference between the value of the steering angle θs immediately after the electric power source of the vehicle is turned on and a value resulting from multiplying the turning angle θw immediately after the electric power source of the vehicle is turned on by the reciprocal of the rudder angle ratio, and may control the electricity supply to the reaction force motor 21 such that the difference is eliminated.

The assist start waiting state is a state of waiting for the confirmation of the completion of the execution of a start-up process of a powertrain by a powertrain control device equipped in the vehicle after the completion of the execution of the preparation process. The reaction force control device 40A determines whether to transition from the assist start waiting state to an ordinary control state, depending on the start-up state of the powertrain of the vehicle.

When a preparation completion flag has not been turned on by the powertrain control device, the reaction force control device 40A determines that the execution of the start-up process of the powertrain of the vehicle has not been completed, and keeps the assist start waiting state. When the preparation completion flag has been turned on by the powertrain control device, the reaction force control device 40A determines that the execution of the start-up process of the powertrain of the vehicle has been completed and transitions from the assist start waiting state to the ordinary control state. The ordinary control state is a state of executing the reaction force control to cause the reaction force motor 21 to generate the steering reaction force. In the ordinary control state, the reaction force control device 40A controls the driving of the reaction force motor 21 depending on the steering state of the steering wheel 11.

### Attachment-detachment Work for Steering Wheel 11

For the steering device 10 configured in this way, for example, in the case where the steering wheel 11 is attached to the steering shaft 12 in a vehicle factory for the first time or in the case where the detachment and attachment of the steering wheel 11 are performed in a vehicle sales company or the like for maintenance, there is the following concern.

There is a risk that some sort of external force acts on the steering shaft 12 after the steering wheel 11 is detached and before the steering wheel 11 is attached again. At this time, there is a risk that the steering shaft 12 rotates due to the external force. Thereby, there is a risk that the middle-point position that is the rotation position of the steering shaft 12 that corresponds to a straight moving state of the vehicle becomes unknown. Accordingly, there is concern that the steering wheel 11 cannot be attached in the correct orientation. A specific example is shown as follows.

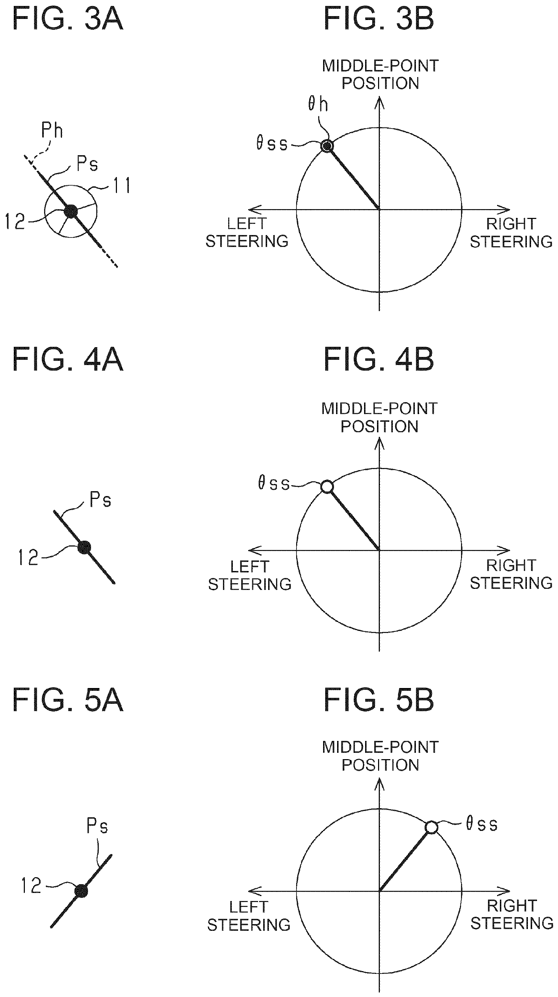

As shown in FIG. 3A and FIG. 3B, for example, a state where the steering wheel 11 has been steered to the left with respect to the steering neutral position is kept as an initial state when maintenance of the steering device 10 is performed. The vehicle is in the stop state. When the maintenance is performed, the electric power source of the steering device 10 is sometimes kept in the on-state.

As shown in FIG. 3A, as an initial state, a rotation position Ph of the steering wheel 11 is kept at a position in a left steering direction with respect to the middle-point position of the steering wheel 11. A rotation position Ps of the steering shaft 12 is also kept at a position in the left steering direction with respect to the middle-point position of the steering shaft 12. The rotation position Ph of the steering wheel 11 and the rotation position Ps of the steering shaft 12 coincide with each other. Further, as shown in FIG. 3B, a rotation angle θh of the steering wheel 11 and a rotation angle θss of the steering shaft 12 are the same as each other.

The rotation position Ph of the steering wheel 11 is a rotation position with respect to the middle-point position of the steering wheel 11. The middle-point position of the steering wheel 11 is a rotation position of the steering wheel 11 that corresponds to the straight moving state of the vehicle. The rotation position Ps of the steering shaft 12 is a rotation position with respect to the middle-point position of the steering shaft 12. The middle-point position of the steering shaft 12 is a rotation position of the steering shaft 12 that corresponds to the straight moving state of the vehicle. Basically, the steering wheel 11 is attached to the steering shaft 12 such that the middle-point position of the steering wheel 11 and the middle-point position of the steering shaft 12 coincide with each other.

The rotation angle θh of the steering wheel 11 is a rotation angle with respect to the middle-point position of the steering wheel 11. The rotation angle θss of the steering shaft 12 is a rotation angle with respect to the middle-point position of the steering shaft 12.

When the maintenance is performed, for example, the steering wheel 11 is detached.

As shown in FIG. 4A, the rotation position Ps of the steering shaft 12 is kept at the same position as the position in the initial state shown in FIG. 3A, that is, at the position in the left steering direction with respect to the middle-point position of the steering shaft 12. As shown in FIG. 4B, the rotation angle θss of the steering shaft 12 is also kept at the same angle as the angle in the initial state shown in FIG. 3B, that is, at the angle in the left steering direction with respect to the middle-point position of the steering shaft 12.

When the maintenance or the like is performed in a state where the steering wheel 11 has been detached, there is a risk that an external force acts on the steering shaft 12.

As shown in FIG. 5A, the steering shaft 12 rotates due to an external force, and thereby, for example, the rotation position Ps of the steering shaft 12 changes from the position in the left steering direction with respect to the middle-point position to a position in a right steering direction with respect to the middle-point position. As shown in FIG. 5B, the rotation angle θss of the steering shaft 12 also changes from the angle in the left steering direction with respect to the middle-point position to an angle in the right steering direction with respect to the middle-point position.

At this time, there is a risk that the degree of the rotation of the steering shaft 12 due to an external force becomes unknown. Therefore, when the steering wheel 11 is attached to the steering shaft 12 again, there is a risk that it is difficult to attach the steering wheel 11 to a correct position.

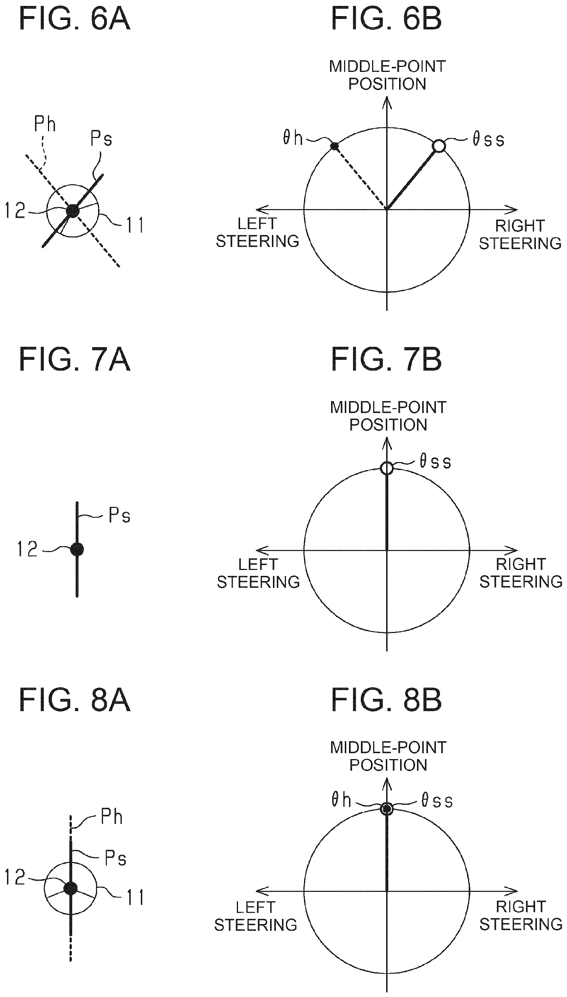

As shown in FIG. 6A, there is a risk that the steering wheel 11 is incorrectly attached, for example, to the same position as the position in the initial state shown in FIG. 3A, that is, to the rotation position Ph in the left steering direction with respect to the middle-point position of the steering wheel 11. The steering shaft 12 is kept at the rotation position Ps after the rotation due to an external force, that is, at the rotation position shown in FIG. 5A.

As shown in FIG. 6B, the rotation angle θh of the steering wheel 11 is the same angle as the angle in the initial state shown in FIG. 3B, that is, the angle in the left steering direction with respect to the middle-point position of the steering wheel 11. The rotation angle θss of the steering shaft 12 is kept at the angle after the rotation due to an external force, that is, at the angle shown in FIG. 5B.

In this way, the steering wheel 11 is attached to the steering shaft 12 in an incorrect orientation, and thereby the middle-point position of the steering wheel 11 and the middle-point position of the steering shaft 12 do not coincide with each other. In the case where the vehicle travels in this state, there is concern that the orientation of the steering wheel 11 does not match with the orientation of the vehicle. For example, even when the rotation position of the steering wheel 11 is set to the middle-point position corresponding to the straight moving state of the vehicle for causing the vehicle to move straight, there is a risk that the vehicle travels rightward or leftward.

Hence, in the embodiment, when maintenance of the steering device 10 is performed, the reaction force control device 40A executes a process for restricting the rotation of the steering shaft 12. A specific example is shown as follows.

### Lock Process for Steering Shaft 12

When the maintenance of the steering device 10 is performed, the external tool 50 is connected to the in-vehicle network 51. The external tool 50 sends a lock start command S1 to the reaction force control device 40A. The lock start command S1 is an electric signal that causes the reaction force control device 40A to start the execution of a lock process that is a process for restricting the rotation of the steering shaft 12. For example, the timing when the lock start command S1 is sent is a timing after the middle-point learning process is completed or a timing after the rudder angle synchronization process is completed, as shown in the time chart of FIG. 2.

A case where the steering shaft 12 is fixed at the middle-point position will be described as an example of the lock process.

When the reaction force control device 40A receives the lock start command S1, the reaction force control device 40A starts the execution of the lock process. For example, the reaction force control device 40A sets the motor middle-point stored in the memory, as a target rotation angle of the reaction force motor 21. The motor middle-point is the rotation position of the reaction force motor 21 when the steering wheel 11 is at the steering neutral position, and corresponds to the middle-point position of the steering shaft 12.

The reaction force control device 40A calculates the difference between the target rotation angle and a real rotation angle that is the actual rotation angle of the reaction force motor 21, and drives the reaction force motor 21 such that the difference that is calculated becomes 0 (zero). That is, when the rotation position of the reaction force motor 21 is changed by the rotation of the steering shaft 12 due to an external force, the reaction force control device 40A controls the reaction force motor 21 such that the real rotation angle of the reaction force motor 21 returns to the target rotation angle (the motor middle-point in this example). Accordingly, the rotation position of the reaction force motor 21 is fixed at the motor middle-point, and thereby the rotation position Ps of the steering shaft 12 is fixed at the middle-point position. The rotation angle of the reaction force motor 21 is detected through a sensor that is provided in the reaction force motor 21.

The reaction force control device 40A may set the middle point of the steering angle θs stored in the memory, as the target rotation angle of the steering angle θs. The reaction force control device 40A calculates the difference between the target rotation angle and the actual steering angle θs that is detected through the rudder angle sensor 24, and drives the reaction force motor 21 such that the difference that is calculated becomes 0 (zero). Thereby, the rotation position Ps of the steering shaft 12 is fixed at the middle-point position.

During the execution of the lock process, the change in the rotation position of the reaction force motor 21 and further the change in the rotation position Ps of the steering shaft 12 are restrained. Therefore, as shown in FIG. 7A, the rotation position Ps of the steering shaft 12 is fixed at the middle-point position. As shown in FIG. 7B, the rotation angle θss of the steering shaft 12 is held at the angle corresponding to the middle-point position. The steering shaft 12 is not rotated by disturbance such as an external force.

Accordingly, when the steering wheel 11 is attached to the steering shaft 12 again, the steering wheel 11 can be attached at the correct position or in the correct orientation. That is, the steering wheel 11 can be attached to the steering shaft 12 such that the middle-point position of the steering wheel 11 and the middle-point position of the steering shaft 12 coincide with each other, as shown in FIG. 8A. The rotation angle θh of the steering wheel 11 and the rotation angle θss of the steering shaft 12 are held at the angle corresponding to the middle-point position, as shown in FIG. 8B.

During the execution of the lock process, the steering shaft 12 is fixed at the middle-point position, and thereby the turning shaft 13 is fixed at the neutral position. The neutral position is the position of the turning shaft 13 that corresponds to the straight moving state of the vehicle.

When the need to fix the rotation position Ps of the steering shaft 12 is eliminated, for example, when the work of the attachment of the steering wheel 11 is completed, the external tool 50 sends a lock end command to the reaction force control device 40A. The lock end command is an electric signal that causes the reaction force control device 40A to end the execution of the lock process. When the reaction force control device 40A receives the lock end command, the reaction force control device 40A ends the execution of the lock process.

### Effects of Embodiment

The embodiment exerts the following effects.
(1) When the steering wheel 11 is attached, the rotation position Ps of the steering shaft 12 is fixed at the middle-point position through the execution of the lock process. Therefore, when the maintenance or the like is performed, it is possible to appropriately cope with the rotation of the steering shaft 12 due to an external force. For example, even when an external force acts on the steering shaft 12, it is possible to attach the steering wheel 11 in the correct orientation. That is, it is possible to easily attach the steering wheel 11 to the steering shaft 12 such that the middle-point position of the steering wheel 11 and the middle-point position of the steering shaft 12 coincide with each other. Further, it is possible to match the orientation of the steering wheel 11 with the orientation of the vehicle.
(2) The execution of the lock process is started after the middle-point learning process is completed. Therefore, it is possible to fix the rotation position of the reaction force motor 21 and further the rotation position of the steering shaft 12, at the middle-point position, based on the correct motor middle-point.
(3) It is possible to fix the rotation position of the steering shaft 12 at the middle-point position, simply by sending the lock start command from the external tool 50 to the reaction force control device 40A. Therefore, it is possible to easily perform attachment and detachment works for the steering wheel 11, particularly, attachment work.
(4) When the rotation position of the steering shaft 12 is fixed at the middle-point position through the execution of the lock process, the turning shaft 13 is also fixed at the neutral position. Therefore, for example, it is easy to adjust toe angle. It is possible to attach components such as the turning wheel 15 in a state where the straightness of the vehicle is secured.
(5) As the handle of the vehicle, there are handles having various shapes, other than the steering wheel 11 having a circular shape. For example, there are variant handles such as a D-shaped handle or an H-shaped handle. In the case where a variant handle is employed, the driver can correctly grasp the handle, by attaching the handle in the correct orientation.

### Other Embodiments

The embodiment may be executed while being modified as follows.

Depending on the work content for the maintenance, it is required to fix the rotation position Ps of the steering shaft 12 at the rotation position Ps when the steering wheel 11 has been detached. Therefore, depending on the content of the work relevant to the maintenance, as the lock process, the rotation position Ps of the steering shaft 12 may be fixed at the rotation position Ps when the steering wheel 11 has been detached. The rotation position Ps does not need to be the middle-point position. That is, the rotation position Ps may be a position in the left steering direction or right steering direction with respect to the middle-point position. The reaction force control device 40A sets the steering angle θs when the steering wheel 11 has been detached, as the target rotation angle of the steering angle θs. The reaction force control device 40A calculates the difference between the target rotation angle and the actual steering angle θs that is detected through the rudder angle sensor 24, and drives the reaction force motor 21 such that the difference that is calculated becomes 0 (zero). Thereby, the rotation position Ps of the steering shaft 12 is fixed at the rotation position Ps when the steering wheel 11 has been detached. Accordingly, when the maintenance or the like is performed, it is possible to appropriately cope with the rotation of the steering shaft 12 due to an external force. Further, it is possible to obtain the turning position of the turning wheels 15 depending on the work content for the maintenance.

Depending on the work content for the maintenance, it is required to fix the rotation position Ps of the steering shaft 12 at a position corresponding to an end position of the turning shaft 13. Therefore, depending on the content of the work relevant to the maintenance, as the lock process, the rotation position Ps of the steering wheel 11 may be fixed at the position corresponding to the end position of the turning shaft 13. The end position is a limit position in a physically movable range of the turning shaft 13. For example, the reaction force control device 40A sets the steering angle θs corresponding to the end position of the turning shaft 13, as the target rotation angle of the steering angle θs. The reaction force control device 40A calculates the difference between the target rotation angle and the actual steering angle θs that is detected through the rudder angle sensor 24, and drives the reaction force motor 21 such that the difference that is calculated becomes 0 (zero). Thereby, the rotation position Ps of the steering shaft 12 is fixed at the rotation position Ps corresponding to the end position of the turning shaft 13. Accordingly, when the maintenance or the like is performed, it is possible to appropriately cope with the rotation of the steering shaft 12 due to an external force. Further, it is possible to obtain the turning position of the turning wheels 15 depending on the work content for the maintenance.

The reaction force motor 21 may include a wire group of a first system and a wire group of a second system. The wire group of the first system and the wire group of the second system are wound around a common stator. The wire group of the first system and the wire group of the second system have an equivalent electric property. The reaction force control device 40A controls the electricity supply to the wire groups of the two systems in the reaction force motor 21, independently for each system.

In this case, the reaction force control device 40A may include a first system circuit and a second system circuit. The first system circuit controls the electricity supply to the wire group of the first system in the reaction force motor 21, depending on the steering torque Th that is detected through the torque sensor 23. The second system circuit controls the electricity supply to the wire group of the second system in the reaction force motor 21, depending on the steering torque Th that is detected through the torque sensor 23.

The turning motor 31 may include a wire group of a first system and a wire group of a second system. The wire group of the first system and the wire group of the second system are wound around a common stator. The wire group of the first system and the wire group of the second system have an equivalent electric property. The turning control device 40B controls the electricity supply to the wire groups of the two systems in the turning motor 31, independently for each system.

In this case, the turning control device 40B may include a first system circuit and a second system circuit. The first system circuit controls the electricity supply to the wire group of the first system in the turning motor 31, based on the steering angle θs that is detected through the rudder angle sensor 24 and the stroke Xw of the turning shaft 13 that is detected through the stroke sensor 34. The second system circuit controls the electricity supply to the wire group of the second system in the turning motor 31, based on the steering angle θs that is detected through the rudder angle sensor 24 and the stroke Xw of the turning shaft 13 that is detected through the stroke sensor 34.

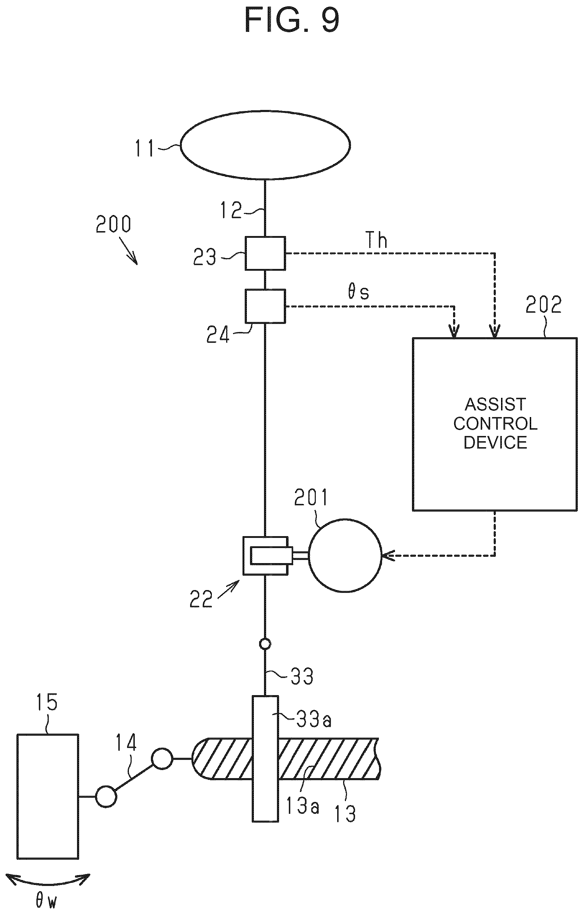

As shown in FIG. 9, the steering control device 40 may be embodied as an electric power steering device 200. In the electric power steering device 200, the steering wheel 11 and the turning wheels 15, which are shown in FIG. 1, are mechanically coupled. That is, the steering shaft 12, the pinion shaft 33, and the turning shaft 13 function as a dynamic power transmission path between the steering wheel 11 and the turning wheels 15. The turning angle θw of the turning wheels 15 is changed by the straight motion of the turning shaft 13 due to the steering of the steering wheel 11.

The electric power steering device 200 includes an assist motor 201 and an assist control device 202. The assist motor 201 is provided at the same position as the reaction force motor 21 or turning motor 31 shown in FIG. 1. In FIG. 9, as an example, the assist motor 201 is provided at the same position as the position of the reaction force motor 21 shown in FIG. 1.

The assist control device 202 is a processing device (processing circuit) that executes a process for controlling the driving of the assist motor 201. The assist control device 202 corresponds to the steering control device. The assist control device 202 executes an assist control for causing the assist motor 201 to generate assist force. The assist force is torque for assisting the operation of the steering wheel 11, and is torque in the same direction as the steering direction of the steering wheel 11. Further, the assist force is steering force for steering that is generated by the assist motor 201 when the movement direction of the vehicle is changed.

The assist control device 202 is connected to the in-vehicle network 51 (not illustrated). In the case where the external tool 50 is connected to the in-vehicle network 51, the assist control device 202 and the external tool 50 can exchange information with each other through the in-vehicle network 51. When the assist control device 202 receives the lock start command S1 from the external tool 50, the assist control device 202 starts the execution of the lock process. When the assist control device 202 receives the lock end command from the external tool 50, the assist control device 202 ends the execution of the lock process.

## Claims

1. A steering control device (40; 202) configured to control a steering device (10; 200), the steering device including a steering shaft (12) to which a handle (11) is detachably coupled and a motor (21; 201) configured to generate torque that is given to the steering shaft (12), the steering control device comprising a processing circuit configured to execute a process for controlling driving of the motor, the process for controlling the driving of the motor including a lock process of driving the motor such that a rotation position of the steering shaft (12) is fixed at a specific position, in a state where the handle (11) has been detached from the steering shaft (12), **characterized in that**
the processing circuit is configured to start execution of the lock process when a command from an external tool (50) has been received.

2. The steering control device according to claim 1, wherein the specific position is a middle-point position of the steering shaft (12) that corresponds to a straight moving state of a vehicle.

3. The steering control device according to claim 2, wherein the processing circuit is configured to set a motor middle-point as a target rotation angle of the motor, and drive the motor such that a difference between the target rotation angle and an actual rotation angle of the motor is eliminated, as the lock process, the motor middle-point being a rotation position of the motor that corresponds to the straight moving state of the vehicle.

4. The steering control device according to claim 2,wherein:
the steering device includes a rudder angle sensor (24) configured to detect a steering angle (θs) of the handle (11); and
the processing circuit is configured to set a middle point of the steering angle that corresponds to the straight moving state of the vehicle, as a target rotation angle of the steering angle, and drive the motor such that a difference between the target rotation angle and the steering angle (θs) that is detected through the rudder angle sensor (24) is eliminated, as the lock process.

5. The steering control device according to claim 1, wherein the specific position is a rotation position of the steering shaft (12) when the handle (11) has been detached.

6. The steering control device according to claim 1,wherein:
the steering device includes a turning shaft (13) that turns a turning wheel (15) of a vehicle; and
the specific position is a rotation position of the steering shaft (12) that corresponds to an end position that is a limit position in a physically movable range of the turning shaft (13).

7. The steering control device according to claim 1,wherein:
the steering device (10) is a steer-by-wire type steering device in which dynamic power transmission is not performed between the handle (11) and a turning wheel of a vehicle; and
the motor is a reaction force motor (21) configured to generate steering reaction force that is given to the steering shaft (12).

8. The steering control device according to claim 1,wherein:
the steering device is an electric power steering device (200) in which the handle (11) and a turning wheel (15) of a vehicle are coupled to each other such that dynamic power is transmitted between the handle (11) and the turning wheel of the vehicle; and
the motor is an assist motor (201) configured to generate assist force by which steering of the handle (11) is assisted.

9. A steering control method for controlling a steering device, the steering device including a steering shaft (12) to which a handle (11) is detachably coupled and a motor configured to generate torque that is given to the steering shaft (12), the steering control method comprising driving the motor such that a rotation position of the steering shaft (12) is fixed at a specific position by a processing circuit, in a state where the handle (11) has been detached from the steering shaft (12), when a command from an external tool (50) has been received.

## Patentansprüche

1. Lenksteuervorrichtung (40; 202), die konfiguriert ist, um eine Lenkvorrichtung (10; 200) zu steuern, wobei die Lenkvorrichtung eine Lenkwelle (12), mit der ein Griff (11) lösbar gekoppelt ist, umfasst und einen Motor (21; 201), der konfiguriert ist, um ein Drehmoment zu erzeugen, das auf die Lenkwelle (12) ausgeübt wird, wobei die Lenksteuervorrichtung eine Verarbeitungsschaltung umfasst, die konfiguriert ist, um einen Prozess zum Steuern des Antriebs des Motors auszuführen, wobei der Prozess zum Steuern des Antriebs des Motors einen Verriegelungsprozess des Antreibens des Motors umfasst, so dass eine Drehposition der Lenkwelle (12) an einer spezifischen Position fixiert ist, wenn der Griff (11) von der Lenkwelle (12) gelöst worden ist, **dadurch gekennzeichnet, dass**
die Verarbeitungsschaltung konfiguriert ist, um die Ausführung des Verriegelungsprozesses zu starten, wenn ein Befehl von einem externen Werkzeug (50) empfangen wurde.

2. Lenksteuervorrichtung nach Anspruch 1, wobei die spezifische Position eine Mittelpunktposition der Lenkwelle (12) ist, die einem Geradeausfahrzustand eines Fahrzeugs entspricht.

3. Lenksteuervorrichtung nach Anspruch 2, wobei die Verarbeitungsschaltung konfiguriert ist, um einen Motormittelpunkt als einen Zieldrehwinkel des Motors einzustellen und den Motor derart anzutreiben, dass eine Differenz zwischen dem Zieldrehwinkel und einem tatsächlichen Drehwinkel des Motors als der Verriegelungsprozess eliminiert wird, wobei der Motormittelpunkt eine Drehposition des Motors ist, die dem Geradeausfahrzustand des Fahrzeugs entspricht.

4. Lenksteuervorrichtung nach Anspruch 2, wobei:
die Lenkvorrichtung einen Ruderwinkelsensor (24) umfasst, der konfiguriert ist, um einen Lenkwinkel (θs) des Griffs (11) zu erfassen; und
die Verarbeitungsschaltung konfiguriert ist, um einen Mittelpunkt des Lenkwinkels, der dem Geradeausfahrzustand des Fahrzeugs entspricht, als einen Zieldrehwinkel des Lenkwinkels einzustellen und den Motor derart anzutreiben, dass eine Differenz zwischen dem Zieldrehwinkel und dem Lenkwinkel (θs), der durch den Ruderwinkelsensor (24) erfasst wird, als der Verriegelungsprozess eliminiert wird.

5. Lenksteuervorrichtung nach Anspruch 1, wobei die spezifische Position eine Drehposition der Lenkwelle (12) ist, wenn der Griff (11) gelöst wurde.

6. Lenksteuervorrichtung nach Anspruch 1, wobei:
die Lenkvorrichtung eine Drehwelle (13) umfasst, die ein Lenkrad (15) eines Fahrzeugs dreht; und
die spezifische Position eine Drehposition der Lenkwelle (12) ist, die einer Endposition entspricht, die eine Grenzposition in einem physisch bewegbaren Bereich der Drehwelle (13) ist.

7. Lenksteuervorrichtung nach Anspruch 1, wobei:
die Lenkvorrichtung (10) eine Steer-by-Wire-Lenkvorrichtung ist, bei der keine dynamische Kraftübertragung zwischen dem Griff (11) und einem Lenkrad eines Fahrzeugs durchgeführt wird; und
der Motor ein Reaktionskraftmotor (21) ist, der konfiguriert ist, um eine Lenkreaktionskraft zu erzeugen, die auf die Lenkwelle (12) ausgeübt wird.

8. Lenksteuervorrichtung nach Anspruch 1, wobei:
die Lenkvorrichtung eine elektrische Servolenkvorrichtung (200) ist, bei der der Griff (11) und ein Lenkrad (15) eines Fahrzeugs derart miteinander gekoppelt sind, dass eine dynamische Kraft zwischen dem Griff (11) und dem Lenkrad des Fahrzeugs übertragen wird; und
der Motor ein Hilfsmotor (201) ist, der konfiguriert ist, um eine Hilfskraft zu erzeugen, durch die das Lenken des Griffs (11) unterstützt wird.

9. Lenksteuerverfahren zum Steuern einer Lenkvorrichtung, wobei die Lenkvorrichtung eine Lenkwelle (12) umfasst, mit der ein Griff (11) lösbar gekoppelt ist, und einen Motor umfasst, der konfiguriert ist, um ein Drehmoment zu erzeugen, das auf die Lenkwelle (12) ausgeübt wird, wobei das Lenksteuerverfahren ein Antreiben des Motors umfasst derartig, dass eine Drehposition der Lenkwelle (12) an einer spezifischen Position fixiert ist, durch eine Verarbeitungsschaltung in einem Zustand, in dem der Griff (11) von der Lenkwelle (12) gelöst wurde, wenn ein Befehl von einem externen Werkzeug (50) empfangen wurde.

## Revendications

1. Dispositif de commande de direction (40 ; 202) configuré pour commander un dispositif de direction (10 ; 200), le dispositif de direction incluant un arbre de direction (12) auquel un volant (11) est accouplé de manière amovible et un moteur (21 ; 201) configuré pour générer un couple de rotation qui est donné à l'arbre de direction (12), le dispositif de commande de direction comprenant un circuit de traitement configuré pour exécuter un processus de commande de l'entraînement du moteur, le processus de commande de l'entraînement du moteur incluant un processus de verrouillage de l'entraînement du moteur de sorte qu'une position de rotation de l'arbre de direction (12) soit fixée à une position spécifique, dans un état où le volant (11) a été détaché de l'arbre de direction (12), **caractérisé en ce que**
le circuit de traitement est configuré pour démarrer l'exécution du processus de verrouillage lorsqu'une commande provenant d'un outil externe (50) a été reçue.

2. Dispositif de commande de direction selon la revendication 1, dans lequel la position spécifique est une position médiane de l'arbre de direction (12) qui correspond à un état de déplacement en ligne droite d'un véhicule.

3. Dispositif de commande de direction selon la revendication 2, dans lequel le circuit de traitement est configuré pour définir un point médian de moteur en tant qu'angle de rotation cible du moteur, et entraîner le moteur de sorte qu'une différence entre l'angle de rotation cible et un angle de rotation réel du moteur soit éliminée, en tant que processus de verrouillage, le point médian de moteur étant une position de rotation du moteur qui correspond à l'état de déplacement en ligne droite du véhicule.

4. Dispositif de commande de direction selon la revendication 2, dans lequel :
le dispositif de direction inclut un capteur d'angle de gouvernail (24) configuré pour détecter un angle de direction (θs) du volant (11) ; et
le circuit de traitement est configuré pour définir un point médian de l'angle de direction qui correspond à l'état de déplacement en ligne droite du véhicule, en tant qu'angle de rotation cible de l'angle de direction, et entraîner le moteur de sorte qu'une différence entre l'angle de rotation cible et l'angle de direction (θs) qui est détecté par l'intermédiaire du capteur d'angle de gouvernail (24) soit éliminée, en tant que processus de verrouillage.

5. Dispositif de commande de direction selon la revendication 1, dans lequel la position spécifique est une position de rotation de l'arbre de direction (12) lorsque le volant (11) a été détaché.

6. Dispositif de commande de direction selon la revendication 1, dans lequel :
le dispositif de direction inclut un arbre tournant (13) qui fait tourner une roue tournante (15) d'un véhicule ; et
la position spécifique est une position de rotation de l'arbre de direction (12) qui correspond à une position finale qui est une position limite dans une plage mobile physiquement de l'arbre tournant (13).

7. Dispositif de commande de direction selon la revendication 1, dans lequel :
le dispositif de direction (10) est un dispositif de direction à commande électrique dans lequel aucune transmission de puissance dynamique n'est effectuée entre le volant (11) et une roue tournante d'un véhicule ; et
le moteur est un moteur de force de réaction (21) configuré pour générer une force de réaction de direction qui est donnée à l'arbre de direction (12).

8. Dispositif de commande de direction selon la revendication 1, dans lequel :
le dispositif de direction est un dispositif de direction à assistance électrique (200) dans lequel le volant (11) et une roue tournante (15) d'un véhicule sont accouplés l'un à l'autre de sorte qu'une puissance dynamique soit transmise entre le volant (11) et la roue tournante du véhicule ; et
le moteur est un moteur d'assistance (201) configuré pour générer une force d'assistance par laquelle la direction du volant (11) est assistée.

9. Procédé de commande de direction pour commander un dispositif de direction, le dispositif de direction incluant un arbre de direction (12) auquel un volant (11) est accouplé de manière amovible et un moteur configuré pour générer un couple de rotation qui est donné à l'arbre de direction (12), le procédé de commande de direction comprenant l'entraînement du moteur de sorte qu'une position de rotation de l'arbre de direction (12) soit fixée à une position spécifique par un circuit de traitement, dans un état où le volant (11) a été détaché de l'arbre de direction (12), lorsqu'une commande provenant d'un outil externe (50) a été reçue.
